# EUROPEAN PATENT APPLICATION

(11) **EP 2 523 343 A2**
(43) Date of publication of application: **14.11.2012**
(21) Application number: 12167048.3
(22) Date of filing: 08.05.2012
(51) Int. Cl.: H02P 27/08

(54) **Apparatus and method for controlling rotary electric machine**

(30) Priority: 09.05.2011 JP 2011104157
(71) Applicant: DENSO CORPORATION, Kariya-city, Aichi-pref. 448-8661 (JP)
(72) Inventor: Tanaka, Asuka, Aichi-pref., 448-8661 (JP); Taniguchi, Makoto, Aichi-pref., 448-8661 (JP)
(74) Representative: Kuhnen & Wacker

(57) **Abstract**

A control apparatus controlling rotary electric machine (10) includes a conversion circuit (INV) converting a DC voltage into an AC voltage so as to rotate the rotary electric machine and a control unit (30). The conversion circuit includes a high-side switch (Sup, Svp, Swp), a low-side switch (Sun, Svn, Swn) that connected to stator windings of the rotary electric machine. The control unit controls the conversion circuit such that both high-side/ low-side switches are controlled to be successively ON and OFF at every predetermined periods for converting the DC voltage into AC voltage. The control unit dynamically controls high-side and low-side neutral switches each connected to a neutral point of the stator windings so as to increase or decrease a voltage at the neutral point whereby current flowing through the rotary electric machine is adjusted. As a result, a torque of the rotary electric machine is optimized.

## Description

### (Technical Field)

The present disclosure relates to control apparatuses for a rotary electric machine, and more particularly to a control apparatus that controls a DC-AC conversion circuit provided with a high-side switching element and a low-side switching element thereby controlling the rotary electric machine.

### (Description of the Related Art)

A rotary electric machine such as a motor generator operates with a control apparatus and a DC-AC conversion circuit provided with a plurality of switching elements. The rotary electric machine is controlled by the control apparatus that controls the DC-AC conversion circuit. To control the rotary electric machine, the switching elements of the DC-AC conversion circuit are ON-OFF controlled by the control apparatus. Specifically, the switching elements include a high-side switch and a low-side switch connected between respective windings of the rotary electric machine and either positive or negative terminal of a DC power source which is connected to the DC-AC conversion circuit. For example, Japanese Patent Application Laid-Open Publication No. 2009-60713 discloses such a control apparatus in which only one winding (phase) of the rotary electric machine is connected to the DC power source, the switching elements connected to remaining windings are turned OFF and the neutral point of the winding is connected to the negative terminal of the DC power source when the rotary machine is running at higher rotation speed.

However, the above-described control apparatus according to the patent publication No. 2009-60713 performs the control (half-wave rectification) where the output voltage of the DC-AC conversion circuit is applied to a single phase at one time. Accordingly, windings corresponding to the respective phases of the rotary electric machine cannot effectively be used.

### SUMMARY

An embodiment provides a newly developed control apparatus that controls a rotary electric machine, in which the control apparatus includes an AC-DC voltage conversion circuit provided with switching elements connected between a DC power source and respective stator windings and switching elements connected between a connection point of the stator windings and the DC power source.

As a first aspect of the embodiment, a control apparatus that controls rotary electric machine (10) having a plurality of stator windings (12, 14, 16) mutually connected at a neutral point, the rotary electric machine rotating with a rotational angle, includes: a conversion circuit (INV) capable of converting a DC voltage of a DC power source (20) into an AC voltage which supplies the AC voltage to the stator windings, the conversion circuit including a high-side operative switch (Sup, Svp, Swp) electrically connected between a positive terminal of a DC power source and the stator windings to open and close therebetween and a low-side operative switch (Sun, Svn, Swn) electrically connected between a negative terminal of the DC power source and the stator windings to open and close therebetween; a neutral switch (Snp, Snn) including a high-side neutral switch (Snp) and a low-side neutral switch (Snn), the high-side neutral switch being electrically connected between the positive terminal of the DC power source and the neutral point to open and close therebetween and the low-side neutral switch being connected between the negative terminal of the DC power source and the neutral point to open and close therebetween; switching means (32) for switching the high-side operative switch and the low-side operative switch to be complementarily ON at a predetermined period determined by the rotational angle, the switching means successively switching the high-side operative switch and the low-side operative switch at successive predetermined periods, thereby converting the DC voltage into the AC voltage; first period estimating means (32, 34) for estimating a first period at the predetermined period, the first period being a period during which the number of low-side operative switches being ON is larger than the number of high-side operative switches being ON; second period estimating means (32, 34) for estimating a second period at the predetermined period, the second period being a period during which the number of high-side operative switches being ON is larger than the number of low-side operative switches being ON; voltage increasing means (34) for increasing the voltage at the neutral point during the first period estimated by the first period estimating means; and voltage decreasing means (34) for decreasing the voltage at the neutral point during the second period estimated by the second period. The voltage increasing means is configured to control the high-side neutral switch to be ON for a period longer than a period of the low-side neutral switch being ON so as to increase the voltage at the neutral point; and the voltage decreasing means is configured to control the low-side neutral switch to be ON for a period longer than a period of the high-side neutral switch being ON so as to decrease the voltage at the neutral point.

When the number of high-side switching elements being turned ON by the switching means is larger than that of the low-side switching elements, the voltage at the neutral point approaches the voltage at the positive terminal of the DC power source. At this point, when the voltage decreasing means operates, the voltage at the neutral point approaches the voltage at the negative terminal of the DC power source. As a result, an amount of current flowing at the high-side switching elements that constitute the conversion circuit can be increased. Moreover, since the number of high-side switching element being ON is larger than that of the low-side switching elements, the amount of current flowing through the rotary electric machine can be increased so that the amount of torque can be increased as well.

Similarly, when the number of low-side switching elements being turned ON by the switching means is larger than that of the high-side switching elements, the voltage at the neutral point approaches the voltage at the negative terminal of the DC power source. At this point, when the voltage increasing means operates, the voltage at the neutral point approaches the voltage at the positive terminal of the DC power source. As a result, an amount of current flowing at the low-side switching elements that constitute the conversion circuit can be increased. Moreover, since the number of low-side switching elements being ON is larger than that of the high-side switching elements, an amount of current flowing through the rotary electric machine can be increased so that an amount of torque can be increased as well.

As a second aspect of the embodiment, the voltage increasing means is configured to start increasing the voltage at the neutral point by controlling the high-side neutral switch to be ON when the low-side neutral switch is turned OFF; and the voltage decreasing means is configured to start decreasing the voltage at the neutral point by controlling the low-side neutral switch to be ON when the high-side neutral switch is turned OFF. The control apparatus further includes variable setting means (34) for variably setting the rotational angle that determines either a timing at which the voltage increasing means starts increasing the voltage at the neutral point or a timing at which the voltage decreasing means starts decreasing the voltage at the neutral point, the variable setting means variably setting the rotational angle based on a parameter that determines an operational state of the rotary electric machine.

According to the second aspect of the embodiment, an amount of current flowing to be increased at the rotary electric machine can be optimized. Moreover, a torque-ripple of the rotary electric machine can be reduced.

As a third aspect of the embodiment, the parameter includes a rotation speed of the rotary electric machine.

Depending on the rotation speed of the rotary electric machine, time required for a rotation corresponding to the same electrical angle varies. Also, an induced voltage that disturbs increasing current depending on the rotation speed changes as well. Therefore, a required period in each interval of the rotational angle for increasing the current flowing varies depending on the rotation speed. According to the third aspect of the embodiment, the rotational angle that determines the timing where the voltage at the neutral point is increased or deceased (start timing), is variably set depending on the rotation speed whereby the start timing can be appropriately set.

The variable setting means is configured to set the rotational angle such that the larger the rotation speed of the rotary electric machine, the more the rotational angle advances from a timing where the predetermined period starts.

Since the inventors have found that the torque of the rotary electric machine increases by advancing the start timing when the rotation speed is large, according to the above-described embodiment, the variable means is implemented.

As a fifth aspect of the embodiment, the parameter includes a parameter that correlates to a torque of the rotary electric machine.

According to the above-described embodiment, the start timing can be adjusted to be a more appropriate value by using the parameter that correlates to the torque of the rotary electric machine.

As a sixth aspect of the embodiment, the voltage increasing means is configured to start increasing the voltage at the neutral point by controlling the high-side neutral switch to be ON when the low-side neutral switch is turned OFF and to advance a timing (start timing) at which the voltage increasing means starts increasing the voltage, relative to a timing where the first period starts. The voltage decreasing means is configured to start decreasing the voltage at the neutral point by controlling the low-side neutral switch to be ON when the high-side neutral switch is turned OFF and to advance a timing (start timing) at which the voltage decreasing means starts decreasing the voltage, relative to a timing where the second period starts.

Since the inventors have found that the torque of the rotary electric machine can be larger or the torque-ripple can be reduced by advancing the start timing relative to the above-described timing, according to the above-described embodiment, the start timings are set to be appropriate.

As a seventh aspect of the embodiment, the voltage increasing means is configured to control the high-side neutral switch to be continuously ON and OFF during the first period so as to adjust the voltage at the neutral point, and the voltage decreasing means is configured to control the low-side neutral switch to be continuously ON and OFF during the second period so as to adjust the voltage at the neutral point.

According to the above-described embodiment, the voltage at the neutral point can be adjusted so that a flexibility of setting the current flowing through the rotary electric machine or a flexibility of adjusting the torque of the rotary electric machine can be enhanced. As a result, appropriate controlling of the rotary electric machine can be achieved.

As an eighth aspect of the embodiment, the switching means is configured to switch the high-side operative switch and the low-side operative switch based on PWM processing so as to control the AC voltage applied to the stator windings to be a fundamental wave component.

According to the above-described embodiment, the switching means is configured to control the current flowing through the rotary electric machine to be a value approximated to the fundamental wave component when the voltage at the neutral point (neutral voltage) is not controlled. Therefore, since the current flowing through the rotary electric machine being shifted from that of the fundamental wave component is caused by controlling the neutral voltage, the torque-ripple can readily be reduced.

As a ninth aspect of the embodiment, the switching means is configured to switch the high-side operative switch and the low-side operative switch based on a pulse-wave control.

The pulse-wave control is performed with a maximum modulation rate so that the maximum rotation speed that allows the current by the pulse-wave control to flow equals to the maximum rotation speed of the rotary electric machine. Assuming the neutral voltage is controlled, a range of the current flowing through the rotary electric machine can be extended whereby the maximum rotation speed of the rotary electric machine can be extended as well.

As a tenth aspect of the embodiment, the voltage increasing means is configured to operate when the rotation speed of the rotary electric machine is higher than equal to or a predetermined value.

When the rotation speed of the rotary electric machine is small, the output line voltage (AC voltage at the stator windings) of the conversion circuit can readily be the output line voltage of when the terminal voltage at the rotary electric machine is fundamental wave component. In this instance, high frequency wave component can be reduced so that the efficiency of the rotary electric machine can be higher and noise can be suppressed. As a result, a risk caused by controlling the neutral voltage can be avoided in the above-described situation.

### BRIEF DESCRIPTION OF THE DRAWINGS

In the accompanying drawings:
Fig. 1 is a diagram showing a system configuration according to the first embodiment;
Fig. 2A is a timing diagram showing a switching operation according to the first embodiment;
Fig. 2B is a configuration of a neutral voltage control unit;
Fig. 2C is a flowchart showing a control procedure of the neutral voltage control unit;
Figs. 3A, 3B, 3C, 3D, 3E and 3F are circuit diagrams respectively showing various modes of the switching operation;
Figs. 4A and 4B are diagrams showing changes in torque versus changes in phase;
Fig. 5 is a diagram showing advantages of the first embodiment;
Fig. 6 is a timing diagram showing a switching operation according to the second embodiment;
Figs. 7A and 7B are diagrams showing advantages of the second embodiment;
Fig. 8 is a table showing combinations of N-phase switching operation according to the third embodiment; and
Fig. 9 is a timing diagram showing a switching operation according to the third embodiment.

### DETAILED DESCRIPTION OF THE PREFERRED EMBODIMENTS

### (First Embodiment)

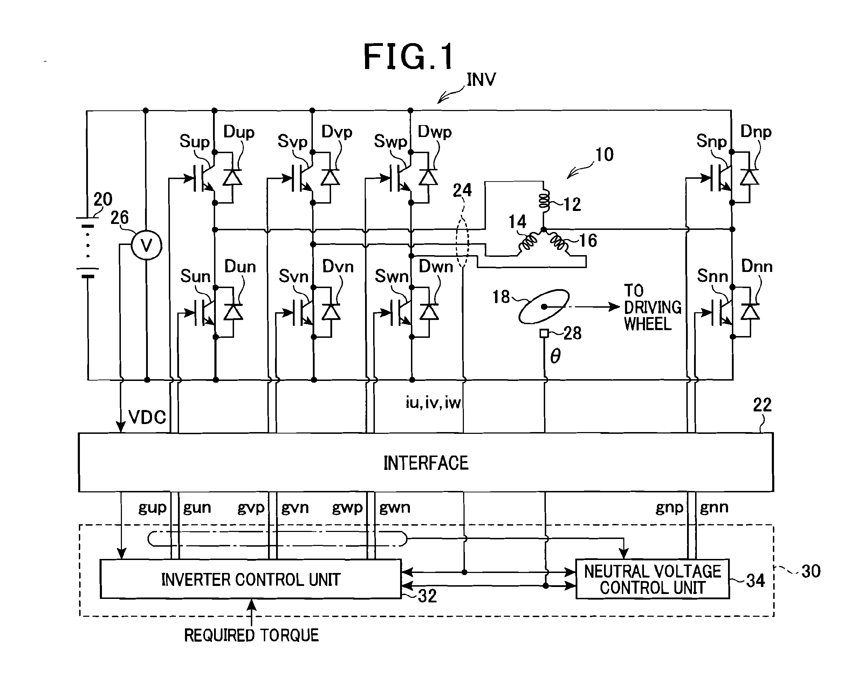

With reference to Figs. 1 to 5, hereinafter will be described the first embodiment in which a control apparatus according to the present disclosure is adapted to a driving motor mounted on a vehicle.

Fig. 1 shows a configuration of the control apparatus according to the first embodiment.

A motor generator 10 as a driving motor of the vehicle includes three stator windings 12, 14 and 16 corresponding to U-phase, V-phase and W-phase respectively, and a rotor 18 mechanically connected to a driving wheel of the vehicle (not shown). The stator windings 12, 14 and 16 are mutually connected at the neutral point of these windings. The rotor 18 may include permanent magnet. In this case, the motor generator is an Interior Permanent Magnet Synchronous Motor (IPMSM) or a Surface Permanent Magnet Synchronous Motor (SPMSM). Moreover, the motor generator is not limited to the motor having permanent magnets, for example, a Synchronous Reluctance Motor or a wound-field synchronous motor can be used.

The motor generator 10 is connected to a high voltage battery 20 (i.e., DC power source) via an inverter INV (i.e., conversion circuit). The inverter INV is provided with three switching element pairs, S*p-S*n (* represents u, v, w). Each of the switching element pair (i.e., a high-side operative switch (S*p) and a low-side operative switch (S*n)) is connected in series at a connection point. The connection points of the three switching element pairs are connected to respective windings corresponding to U-phase, V-phase and W-phase. Meanwhile, the high voltage battery 20 is a secondary battery of which terminal voltage exceeds 100 volts.

The neutral point of the stator windings of the motor generator 10 is connected to the positive terminal of the high voltage battery 20 via the switching element Snp (high-side neutral switch) and connected to the negative terminal of the high voltage battery 20 via the switching element Snn (low-side neutral switch).

Regarding the above-described switching elements S$# ($ represents u, v, w, n; # represents p, n), an insulated gate bipolar transistor (IGBT) is employed according to the embodiment. The switching elements S$# include diodes D$# connected in parallel (in reverse direction of the switching element) to the switching elements.

According to the embodiment, following sensor devices are used to detect a state of the motor generator 10 and the inverter INV. The sensor devices includes a current sensor 24 to detect current iu, iv, iw which flow through the respective phase (u, v, w) of the motor generator 10, a voltage sensor 26 that detects the input voltage of the inverter INV (power supply voltage VDC) and a rotation angle sensor 28 that detects an electrical angle based on a rotational angle θ of the motor generator 10.

A control unit 30 which constitutes a low voltage system acquires the detected values of the above-described sensors via interface 22. The control unit 30 includes an inverter control unit 32 and neutral voltage control unit 34. Based on the detected values of the sensors, the inverter control unit 32 generates an operation signal that operates the inverter INV and outputs the operation signal. The operation signal g*# controls the switching elements S*# (* represents u, v, w and # represents p, n) of the inverter INV. Specifically, in a range when an amplitude of the fundamental wave component in the output line voltage of the inverter INV ranges within a square root of 3 divided by 2 (√3 / 2) of the power supply voltage VDC, the operation signal g*# is generated by a well-known triangle-wave PWM (pulse width modulation) processing. When the amplitude of the fundamental wave component of the output line voltage exceeds the voltage √3 / 2 of the power supply voltage VDC, a well-known over-modulation is applied to perform a pulse-wave control. It is noted that the high-side operation signal g*p and corresponding low-side operation signal g*n generated by the inverter control unit 32 are complementary signals each other. That is to say, when either one operation signal is controlled to be ON, the other operation signal is controlled to be OFF except a dead time period. The inverter control unit 32 and the neutral voltage control unit 34 can be configured by hardware circuits such as integrated circuits or a hardware circuit with a microprocessor where a control software is executed. Regarding the microprocessor, a well-known ECU (electronic control unit) can be employed in this controller 30. The inverter control unit 32 corresponds to switching means. The inverter control unit 32 and the neutral voltage control unit 34 corresponds to first period estimating means, second period estimating means, voltage increasing means and voltage decreasing means.

Meanwhile, the neutral voltage control unit 34 controls the switching elements Snp and Snn in order to increase the maximum output of the motor generator 10 while the inverter control unit 32 performs the pulse-wave control. It is noted that the switching elements Snp and Snn are controlled by the operation signals gnp and gnn. The operation signals gnp and gnn are complementary signals each other. According to the embodiment, the neutral voltage control unit 34 does not control the switching elements Snp and Snn except when the pulse-wave control is performed.

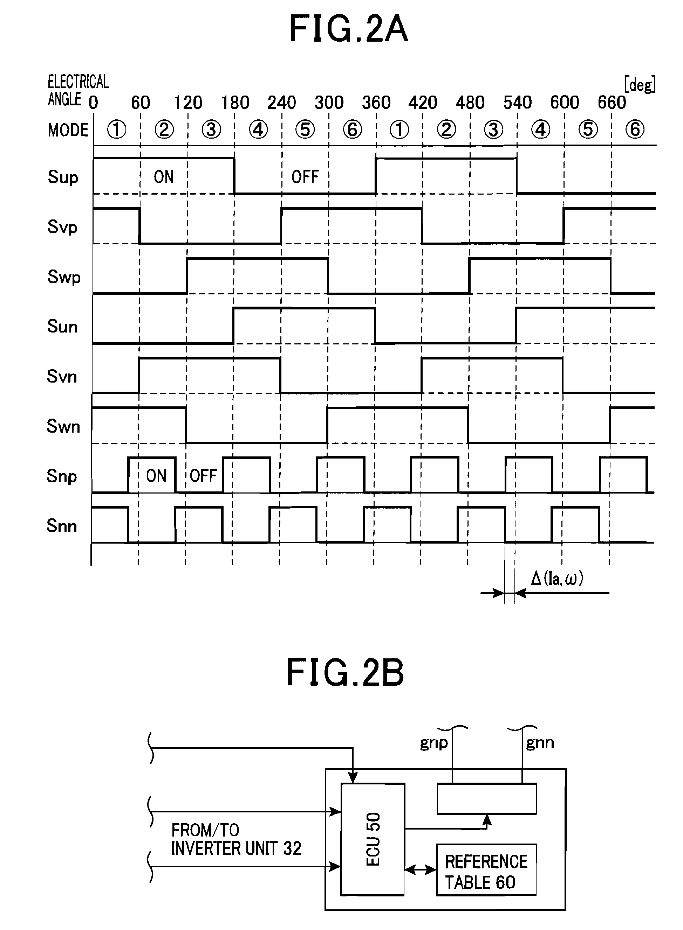

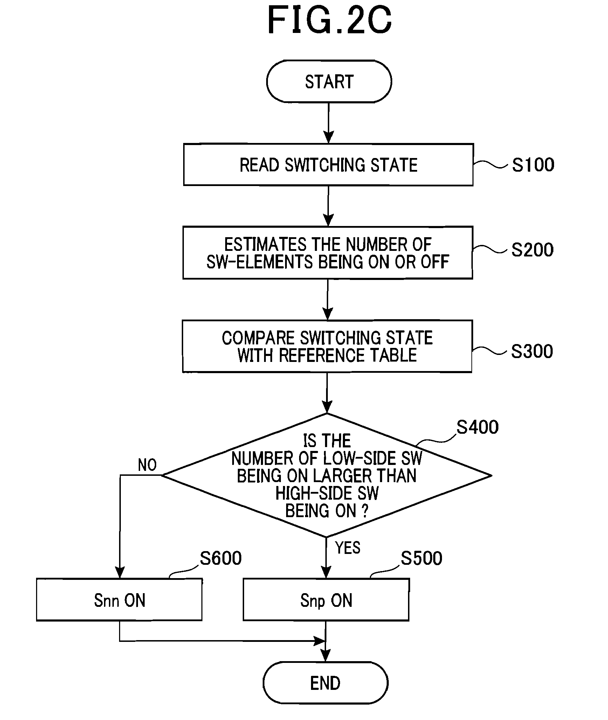

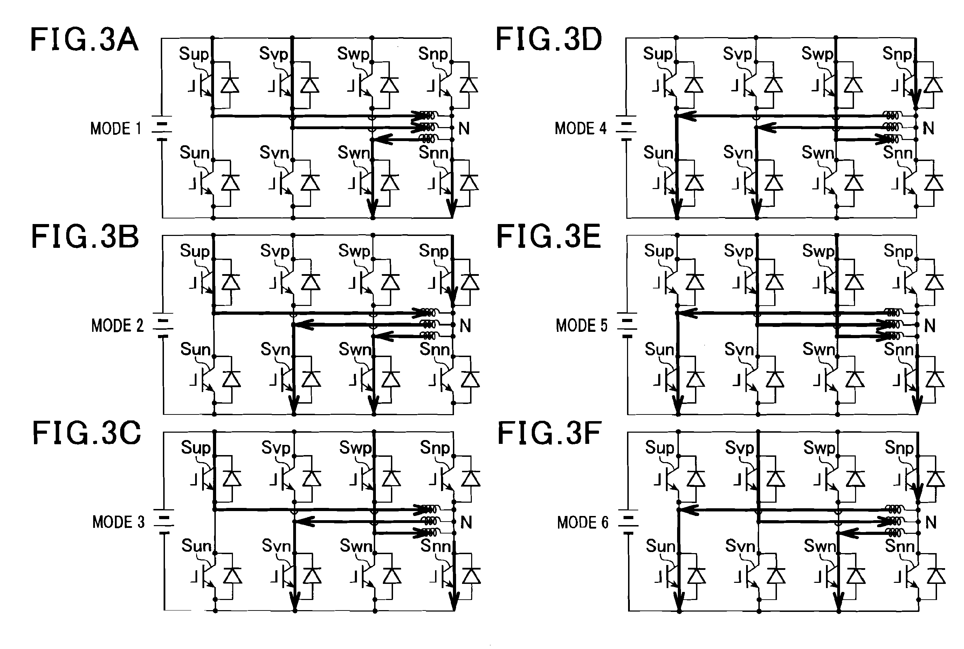

Next, with reference to Figs. 2 and 3, operation modes operated by the neutral voltage control unit 34 is described as follows. As shown in Fig. 2A, the switching elements S*# are controlled to be ON and OFF successively at a predetermined period determined a rotational angle (a period corresponding to each 60 deg interval as shown in Fig. 2A).

Mode 1 (Fig. 3A): mode 1 is that the switching elements Sup, Svp and Swn are turned ON. In the mode 1, basically, the switching element Snn turns ON and the switching element Snp turns OFF. When the switching elements Snp and Snn are not operated, controlling the switching elements Sup, Svp and Swn to be turned ON, the voltage at the connection point (i.e., neutral point) of the stator windings 12, 14 and 16 (i.e., neutral voltage) becomes higher than the voltage VDC/2. On the other hand, when controlling the switching element Snn to be turned ON, the neutral voltage becomes zero volts. Therefore, current flowing through the switching elements Sup and Svp increases so that current flowing through the motor generator 10 increase, thereby increasing the torque of the motor generator 10 comparing when no controlling of the neutral voltage by the switching element Snn is performed. In other words, the number of high-side operative switches being ON is larger than that of the low-side operative switches being ON.

Mode 2 (Fig. 3B): mode 2 is that the switching elements Sup, Svn, Swn are turned ON. In the mode 2, basically, the switching element Snp turns ON and the switching element Snn turns OFF. When the switching elements Snp and Snn are not operated, controlling the switching elements Sup, Svn and Swn to be turned ON, the voltage at the connection point of the stator windings 12, 14 and 16 (i.e., neutral voltage) becomes lower than the voltage VDC/2. On the other hand, turning the switching element Snp ON, the neutral voltage becomes VDC. Therefore, current flowing through the switching elements Svn and Swn increases so that current flowing through the motor generator 10 increase, thereby increasing the torque of the motor generator 10 comparing when no controlling of the neutral voltage by the switching element Snp is performed. In other words, the number of low-side operative switches being ON is larger than that of the high-side operative switches being ON.

Mode 3 (Fig. 3C): mode 3 is that the switching elements Sup, Svn, Swp are turned ON. In the mode 3, basically, the switching element Snn turns ON and the switching element Snp turns OFF. The technical feature thereof is similar to that of the mode 1.

Mode 4 (Fig. 3D): mode 4 is that the switching elements Sun, Svn, Swp are turned ON. In the mode 4, basically, the switching element Snp turns ON and the switching element Snn turns OFF. The technical feature thereof is similar to that of the mode 2.

Mode 5 (Fig. 3E): mode 5 is that the switching elements Sun, Svp, Swp are turned ON. In the mode 5, basically, the switching element Snn turns ON and the switching element Snp turns OFF. The technical feature thereof is similar to that of the mode 1.

Mode 6 (Fig. 3F): mode 6 is that the switching elements Sun, Svp, Swn are turned ON. In the mode 6, basically, the switching element Snp turns ON and the switching element Snn turns OFF. The technical feature thereof is similar to that of the mode 2.

As described above, the neutral voltage control unit 34 controls the switching elements Snp and Snn depending on a combination of the switching state according to the switching elements S*#, i.e., above-described Mode 1 to 6. Fig. 2B is a configuration of the neutral voltage control unit 34. As shown in Fig. 2B, the neutral voltage control unit 34 includes a well-known ECU (electronic control unit) 50 and a reference table 60.

With reference to Fig. 2C, a control procedure of the neutral voltage control unit 34 is described as follows. According to the embodiment, the neutral voltage control unit 34 operates by the ECU 50 together with the reference table 60. For example, this control procedure is executed by a software routine executed in the ECU 50.

Specifically, the ECU 50 reads the switching state of the switching elements S*#of the inverter INV from the inverter control unit 32 at the predetermined period (S100) and estimates the number of switching elements being turned ON or OFF among the switching elements S*# (S200). Then, the ECU 50 compares the switching state with the reference table 60 (S300) so as to determine either switching element Snp or Snn to be turned ON based on the comparison result (S400).

Subsequently, the ECU 50 controls the switching element Snp to be turned ON when the number of low-side operative switches being ON is larger than the number of high-side operative switches being ON (S500) and controls the switching element Snn to be turned ON when the number of high-side operative switches being ON is larger than the number of low-side operative switches being ON (S600).

As described above, the neutral voltage control unit 34 controls the switching element Snn to be turned ON so as to decrease the neutral voltage when the neutral voltage is higher than the voltage VDC/2 while the neutral voltage is not controlled, and controls the switching element Snp to be turned ON so as to increase the neutral voltage when the neutral voltage is lower than the voltage VDC/2 while the neutral voltage is not controlled. However, as shown in Fig. 2A, timing at which the switching elements Snp and Snn turn ON is controlled to be advanced from a start timing at which the respective switching elements turn ON in the above-described operating modes (i.e., electrical angle Δ as shown in Fig. 2A). This control procedure (i.e., variable setting means) is performed based on the operation signal g*# outputted by the inverter control unit 32 and the rotational angle θ. Here, an amount of angle Δ (referred to advanced angle Δ) used in the control procedure is designed considering an increase in the average torque of the motor generator 10 and a view of suppressing a torque-ripple. The neutral voltage control unit 34 corresponds to the variable setting means.

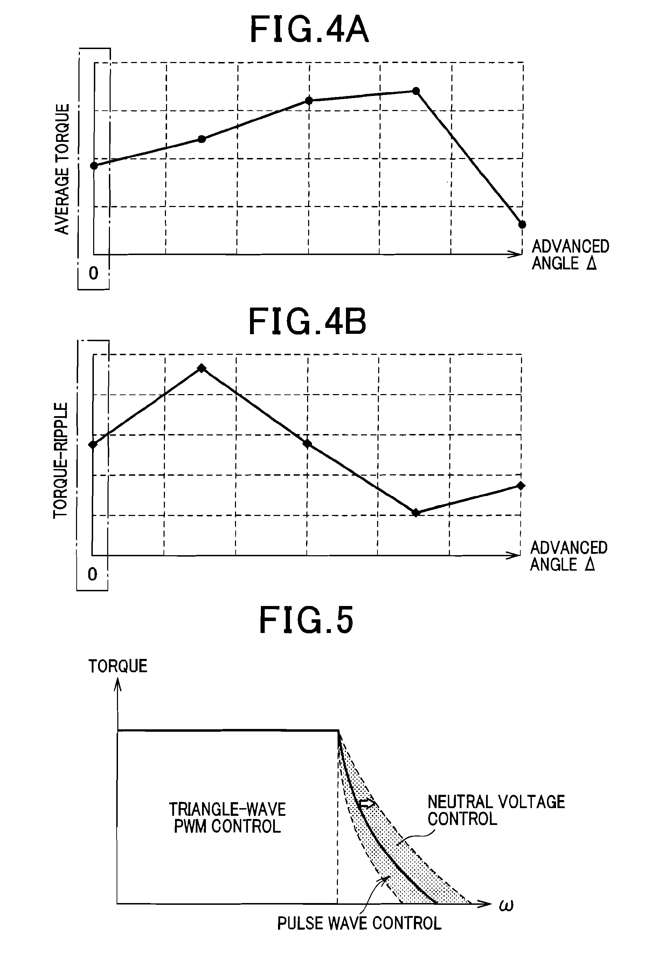

Fig. 4A is a diagram showing a relationship between an amount of the advanced angle Δ and the average torque and Fig. 4B is a diagram showing a relationship between the advanced angle Δ and an amount of the torque-ripple. As shown in Figs. 4A and 4B, the average torque and the torque-ripple vary depending on the advanced angle Δ. Therefore, an amount of the advanced angle Δ is set to be a value capable of maximizing the average torque and significantly reducing the torque-ripple.

Specifically, in the control procedure, the advanced angle Δ is set to be changed depending on current Ia flowing through the motor generator 10 and an electrical angular velocity ω corresponding to the rotation speed of the motor generator 10. The value of the current Ia is determined based on the amplitude of the phase current and an average current per an electrical angular velocity. The current Ia and the electrical angular velocity ω determine an operational state of the motor generator 10. Specifically, since the current Ia is a parameter that correlates to the torque of the motor generator 10, by setting an amount of the advanced angle Δ to be variable based on the current Ia, the required torque can readily be obtained. Moreover, the electrical angular velocity ω is a parameter that changes a time required for rotation of the same rotational angle and correlates to a force that disturbs current flowing such as an induced voltage. Hence, the required torque can readily be obtained by setting an amount of the advanced angle Δ to be variable based on the electrical angular velocity ω. It is preferable to set the advanced angle Δ such that the larger the electrical angular velocity ω, the larger the advanced angle Δ. In this instance, when the electrical angular velocity ω is small, the advanced angle Δ can be set to zero.

Fig. 5 illustrates advantages of the first embodiment. Referring to Fig. 5, controlling the neutral voltage in a region where a pulse-wave control is performed (pulse-wave control region), the maximum value of the electrical angular velocity ω at the motor generator 10 can be increased. That is to say, having the current capable of flowing through the motor generator 10 increase at the same electrical angular velocity ω, the maximum value of the electrical angular velocity ω at the motor generator 10 is increased. As a result, maximum output of the motor generator 10 can be increased and therefore, a smaller size of synchronous motor can be employed for the output required for the motor generator 10.

According to the above-described embodiment, the following advantages can be obtained.
(1) In the pulse-wave control region, when the neutral voltage expected by the pulse-wave control is higher than the voltage VDC/2, the neutral voltage is controlled to be decreased and when the neutral voltage is lower than the voltage VDC/2, the neutral voltage is controlled to be increased. As a result, current flowing through the motor generator 10 can be increased so that the torque of the motor generator 10 can be increased as well.
(2) The timing at which the switching elements Snp and Snn turns ON is controlled to be advanced from the start timing of the operating modes.

As a result, the torque of the motor generator or the torque ripple can be decreased.
(3) The advanced angle Δ is set to be changed depending on the rotation speed of the motor generator 10 (electrical angular velocity w). As a result, the advanced angle Δ can be set more accurately.
(4) The advanced angle Δ is set to be changed depending on the current Ia flowing through the motor generator 10. As a result, the advanced angle Δ can be set more accurately.
(5) The neutral voltage is controlled under a condition that the electrical angular velocity ω of the motor generator 10 is higher than the predetermined velocity. As a result, under a condition that an amplitude of the fundamental wave component in the output line voltage of the inverter INV ranges within a square root of 3 divided by 2 (√3 / 2) of the power supply voltage VDC, the output line voltage of the inverter INV can be fundamental wave component by using the triangle-wave PWM processing thereby reducing high-frequency components thereof.

### (Second Embodiment)

With reference to the drawings, hereinafter is described the second embodiment in which differences between the first embodiment and the second embodiment are mainly described.

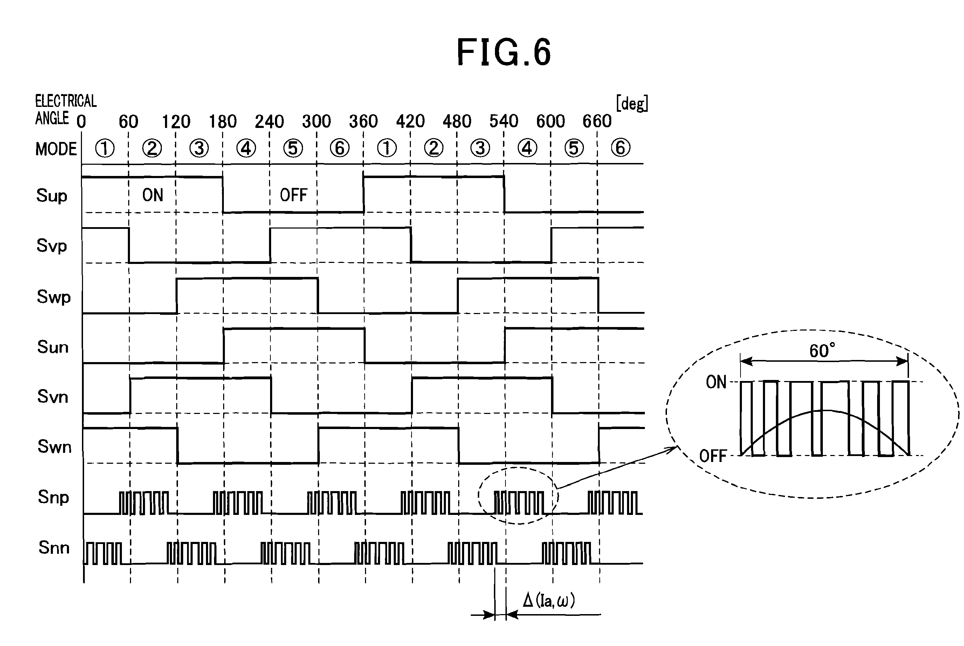

A control operation of the neutral voltage according to the second embodiment is shown in Fig. 6. As shown in Fig. 6, as a procedure in order to decrease the neutral voltage, the PWM processing is applied to the switching element Snn to increase the average potential at the neutral point to be higher than zero volts. As a procedure in order to increase the neutral voltage, the PWM processing is applied to the switching element Snp to decrease the average voltage at the neutral point to be lower than VDC. Specifically, in each electric angle (a period corresponding to each electric angle, 60 degrees) where the switching elements Sn# (# represents p or n) are operated in this period, the PWM processing based on a comparison between sinusoidal waves and carrier waves such as triangle waves is performed so as to simulate a half period of sinusoidal waves having a predetermined amplitude A at the neutral voltage. As a result, during a period of the each electric angle (60 degrees), ON period of the switching elements Sn# gradually increases and then gradually decreases afterwards.

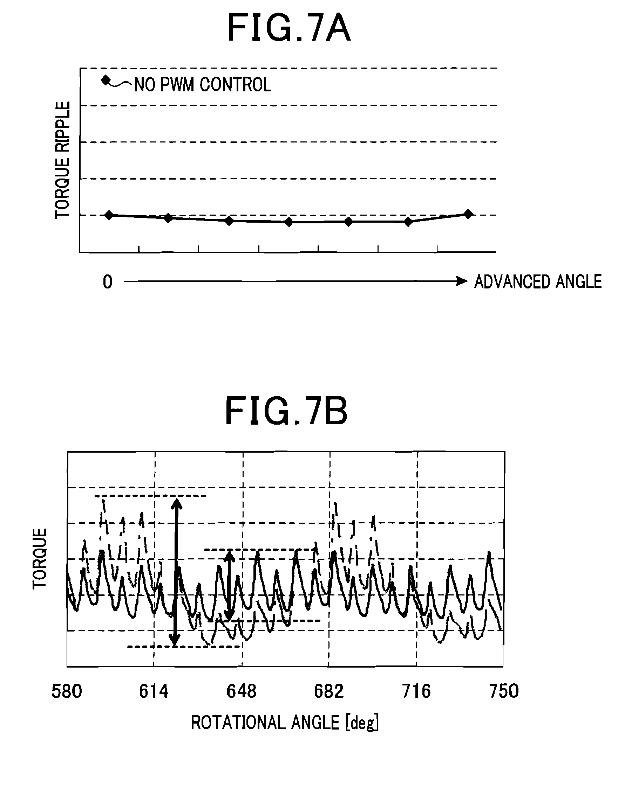

Figs. 7A and 7B illustrate an advantage of the PWM processing during the ON period of the switching elements Sn#. As shown in Fig. 7A, the torque-ripple can be reduced by the PWM processing. Fig. 7B illustrates an example of a change of the torque. The solid line represents the third embodiment and the dotted line represents the above-described first embodiment.

According to the second embodiment, in addition to the advantages of the first embodiment, the following advantages can be obtained.
(6) The PWM processing is performed during the ON period of the switching elements Sn# whereby the average voltage at the neutral is adjusted. As a result, flexibility of adjusting the current flowing through the motor generator 10 and the torque thereof can be enhanced. Therefore, more accurate control can be achieved.

### (Third Embodiment)

With reference to the drawings, hereinafter is described the third embodiment in which differences between the first embodiment and the third embodiment are mainly described.

According to the third embodiment, the neutral voltage is controlled when the triangle-wave PWM processing is performed. This is to expand an operating region where an amount of high frequency component is low. In other word, in the triangle-wave PWM processing, since the output line voltage of the inverter INV is controlled so as to simulate the respective phase voltage to be fundamental wave component, high frequency components can be suppressed. Meanwhile, in the pulse- wave control, the high frequency components are included in the output line voltage of the inverter INV. Therefore, by controlling the neutral voltage when the triangle-wave PWM processing is performed, even when the line voltage applied to the motor generator 10 is shifted from the fundamental wave component or the current flowing through the motor generator 10 is shifted from the fundamental wave component, the amount of high frequency components may be reduced compared to controlling the neutral voltage with the pule-wave control. Moreover, by controlling the neutral voltage, a region where the triangle-wave PWM processing can be expanded. As a result, a region where high efficient drive can be achieved and a region where driving-noise is small can be expanded as well.

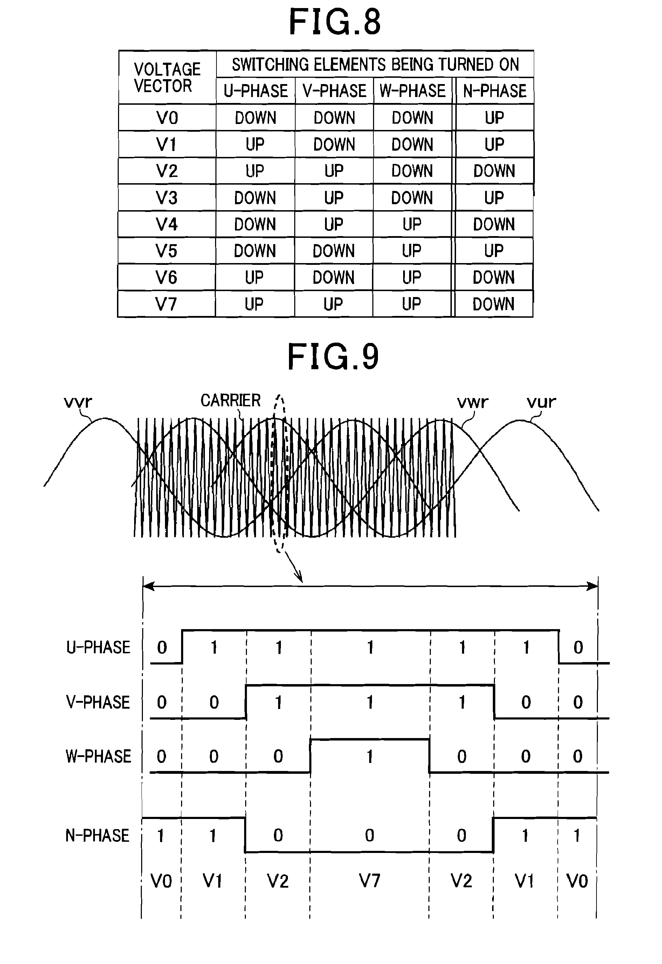

According to the embodiment, the inverter control unit 32 controls the inverter INV thereby controlling the switching elements Snp and Snn. As shown in Fig. 8, eight voltage vectors represent state of the inverter INV to be controlled. For example, a voltage vector representing a state where the low-side switching elements Sun, Svn and Swn are turned ON ('DOWN' in Fig. 8), is V0. Similarly, a voltage vector representing a state where the high-side switching elements Sup, Svp and Swp are turned ON ('UP' in Fig. 8), is V7. The N-phase as shown in Fig. 8 represents the neutral point, and shows a regulation how to control the switching elements Snp and Snn. That is to say, according to the third embodiment as well as other embodiments, when a neutral voltage depending on a state represented by a voltage vector is lower than voltage VDC/2, the switching element Snp is controlled to be turned ON in order to increase the neutral voltage to be VDC, and when the neutral voltage depending on the above-described state is higher than the VDC/2, the switching element Snn is controlled to be ON in order to decrease the neutral voltage to be zero volts.

A control operation of the neutral voltage according to the third embodiment is shown in Fig. 9.

According to the third embodiment, in addition to the advantages of the second embodiment, following advantages can be obtained.
(7) The neutral voltage is controlled while the inverter control unit 32 controls the output line voltage of the inverter INV in order to control the voltages applied to the respective phases of the motor generator 10 to be fundamental wave component.

As a result, high frequency component can be suppressed and the efficiency of the motor generator 10 can be enhanced when the neutral voltage is controlled.

### (Other Embodiment)

The above-described embodiments can be modified as follows.

Regarding, variable setting means, the angle Δ is set to be changed depending on the electrical angular velocity ω and the current Ia. However, the angle Δ can be changed depending on either the electrical angular velocity ω or the current Ia.

Further, the angle Δ is not limited to the advanced angle. For example, a delayed angle can be employed when torque ripple is reduced by using the delayed angle.

It is not limited to use current Ia for a parameter that correlates to the torque, however, a required torque Tr can be employed.

Regarding adjusting the neutral voltage, it is not limited to a procedure that the neutral voltage is gradually increased and then gradually decreased in a period of the neutral voltage being increased (neutral voltage increasing period) and a procedure that the neutral voltage is gradually decreased and then gradually increased in a period of the neutral voltage being decreased (neutral voltage decreasing period). For example, the neutral voltage can be controlled to be increased linearly in the neutral voltage increasing period or the neutral voltage can be controlled to be decreased linearly in the neutral voltage decreasing period. These procedures can be accomplished by changing the angular velocity of sinusoidal waves where a signal determining the neutral voltage is represented.

Also, the amplitude of sinusoidal waves where a signal determining the neutral voltage is represented can be changed depending on the electrical angular velocity ω or the current Ia.

Moreover, it is not limited to use the sinusoid waves for the neutral voltage to be changed. For example, as long as the switching elements Snp are controlled to be ON and OFF so as to control the average value of the neutral voltage during a period of the neutral voltage being increased, to be lower than the voltage at the positive terminal of the high voltage battery 20, the ON period relative to a single ON/OFF period can be changed as a fixed value. Similarly, as long as the switching elements Snn are controlled to be ON and OFF so as to control the average value of the neutral voltage during a period of the neutral voltage being decreased, to be higher than the negative terminal of the high voltage battery 20, the ON period relative to a single ON/OFF period can be changed as a fixed value.

Regarding the switching means, in the third embodiment, the PWM processing is performed to have the command voltage for each phase, i.e., v*r (* represents u, v, w) to be fundamental wave components in order to generate the operation signal g*#. However, instead of basic command voltage, a command voltage v*r applied by a two phase modulation or a command voltage v*r applied by the third harmonic wave can be used for PWM processing so as to generate the operation signal g*#.

Regarding the neutral voltage controlling means, as a procedure to decrease the neutral voltage, it is not limited to the operation where the low-side switching element Snn is controlled to be ON and OFF and the high-side switching element Snn is controlled to be fixed low. For example, the high-side switching element Snp can be controlled to be ON during a period where the low-side switching element Snn turns OFF, based on the controlling of the low-side switching element Snn to be ON and OFF. Even in this case, the average voltage potential of the neutral point can be decreased by controlling the ON period of the low-side switching element Snn to be longer than the ON period of the high-side switching element Snp.

Similarly, as a procedure to increase the neutral voltage, it is not limited to the operation where the high-side switching element Snp is controlled to be ON and OFF and the low-side switching element is controlled to be fixed low.

In the third embodiment, the variable setting means can be provided. For example, this is accomplished such that the carrier signal of which phase is advanced from the carrier signal generated by the operation signal g*# and the command voltage v*r are compared and the timing of the voltage vectors V0 to V7 to be changed is estimated based on the comparison result.

Moreover, either one procedure of increasing or decreasing the neutral voltage can be employed in the control operation. In this instance, it is considered that the average voltage potential of the neutral point at an electrical angular period would be shifted from the voltage VDC/2. However, even in this case, the torque of the motor generator can be increased compared to a procedure in which neutral voltage is not controlled.

Regarding the rotary electric machine, it is not limited to the three-phase rotary electric machine, however, an electric rotary machine having four phases or more, e.g. five-phase stator windings connected with each other can be employed. The number of phases used for the stator windings is preferably an odd numbers.

It is noted that as an example of controlling the neutral voltage, the neutral voltage can be controlled to be increased or decreased by using lower modulation rate.

## Claims

1. A control apparatus that controls rotary electric machine (10) having a plurality of stator windings (12, 14, 16) mutually connected at a neutral point of the stator windings, the rotary electric machine rotating with a rotational angle, comprising:
a conversion circuit (INV) capable of converting a DC voltage of a DC power source (20) into an AC voltage which supplies the AC voltage to the stator windings, the conversion circuit including a high-side operative switch (Sup, Svp, Swp) electrically connected between a positive terminal of a DC power source and the stator windings to open and close therebetween and a low-side operative switch (Sun, Svn, Swn) electrically connected between a negative terminal of the DC power source and the stator windings to open and close therebetween;
a neutral switch (Snp, Snn) including a high-side neutral switch (Snp) and a low-side neutral switch (Snn), the high-side neutral switch being electrically connected between the positive terminal of the DC power source and the neutral point to open and close therebetween and the low-side neutral switch being connected between the negative terminal of the DC power source and the neutral point to open and close therebetween;
switching means (32) for switching the high-side operative switch and the low-side operative switch to be complementarily ON at a predetermined period determined by the rotational angle, the switching means successively switching the high-side operative switch and the low-side operative switch at successive predetermined periods, thereby converting the DC voltage into the AC voltage;
first period estimating means (32, 34) for estimating a first period at the predetermined period, the first period being a period during which the number of low-side operative switches being ON is larger than the number of high-side operative switches being ON;
second period estimating means (32, 34) for estimating a second period at the predetermined period, the second period being a period during which the number of high-side operative switches being ON is larger than the number of low-side operative switches being ON;
voltage increasing means (34) for increasing the voltage at the neutral point during the first period estimated by the first period estimating means; and
voltage decreasing means (34) for decreasing the voltage at the neutral point during the second period estimated by the second period, wherein
the voltage increasing means is configured to control the high-side neutral switch to be ON for a period longer than a period of the low-side neutral switch being ON so as to increase the voltage at the neutral point; and the voltage decreasing means is configured to control the low-side neutral switch to be ON for a period longer than a period of the high-side neutral switch being ON so as to decrease the voltage at the neutral point.

2. The control apparatus according to claim 1, wherein the voltage increasing means is configured to start increasing the voltage at the neutral point by controlling the high-side neutral switch to be ON when the low-side neutral switch is turned OFF; and the voltage decreasing means is configured to start decreasing the voltage at the neutral point by controlling the low-side neutral switch to be ON when the high-side neutral switch is turned OFF, and
the control apparatus further comprising variable setting means (34) for variably setting the rotational angle that determines either a timing at which the voltage increasing means starts increasing the voltage at the neutral point or a timing at which the voltage decreasing means starts decreasing the voltage at the neutral point, the variable setting means variably setting the rotational angle based on a parameter that determines an operational state of the rotary electric machine.

3. The control apparatus according to claim 2, wherein the parameter includes a rotation speed of the rotary electric machine.

4. The control apparatus according to claim 3, wherein the variable setting means is configured to set the rotational angle such that the larger the rotation speed of the rotary electric machine, the more the rotational angle advances from a timing where the predetermined period starts.

5. The control apparatus according to any one of claims 2 to 4, wherein the parameter includes a parameter that correlates to a torque of the rotary electric machine.

6. The control apparatus according to any one of claims 1 to 5, wherein
the voltage increasing means is configured to start increasing the voltage at the neutral point by controlling the high-side neutral switch to be ON when the low-side neutral switch is turned OFF and to advance a timing at which the voltage increasing means starts increasing the voltage, relative to a timing where the first period starts; and
the voltage decreasing means is configured to start decreasing the voltage at the neutral point by controlling the low-side neutral switch to be ON when the high-side neutral switch is turned OFF and to advance a timing at which the voltage decreasing means starts decreasing the voltage, relative to a timing where the second period sta rts.

7. The control apparatus according to any one of claims 1 to 6, wherein the voltage increasing means is configured to control the high-side neutral switch to be continuously ON and OFF during the first period so as to adjust the voltage at the neutral point.

8. The control apparatus according to any one of claims 1 to 6, wherein the voltage decreasing means is configured to control the low-side neutral switch to be continuously ON and OFF during the second period so as to adjust the voltage at the neutral point.

9. The control apparatus according to any one of claims 1 to 8, wherein the switching means is configured to switch the high-side operative switch and the low-side operative switch based on PWM processing so as to control the AC voltage applied to the stator windings to be fundamental wave component.

10. The control apparatus according to any one of claims 1 to 9, wherein the switching means is configured to switch the high-side operative switch and the low-side operative switch based on a pulse-wave control.

11. The control apparatus according to any one of claims 1 to 10, wherein the voltage increasing means is configured to operate when the rotation speed of the rotary electric machine is higher than or equal to a predetermined value.

12. The control apparatus according to any one of claims 1 to 10, wherein the voltage decreasing means is configured to operate when the rotation speed of the rotary electric machine is higher than or equal to a predetermined value.

13. A method for controlling a rotary electric machine having a plurality of stator windings mutually connected at a neutral point of the stator windings, comprising:
switching a high-side operative switch (Sup, Svp, Swp) electrically connected between a positive terminal of a DC power source and the stator windings and, a low-side operative switch (Sun, Svn, Swn) electrically connected between a negative terminal of the DC power source and the stator windings, to be complementarily ON at a predetermined period, wherein the high-side operative switch and the low-side operative switch being successively switched at successive predetermined periods;
reading a switching state of the high-side operative switch and the low-side operative switch at the predetermined period;
comparing the switching state with a reference table in which combination of switching states are given, at the predetermined period;
estimating a first period at the predetermined period based on the switching state compared with the reference table, the first period being a period during which the number of low-side operative switches being ON is larger than the number of high-side operative switches being ON;
estimating a second period at the predetermined period based on the switching states compared with the reference table, the second period being a period during which the number of high-side operative switches being ON is larger than the number of low-side operative switches being ON;
controlling a high-side neutral switch connected to the neutral point to be ON for a period longer than a period of the low-side neutral switch connected to the neutral point being ON, when the first period is estimated; and
controlling the low-side neutral switch to be ON for a period longer than a period of the high-side neutral switch being ON, when the second period is estimated.
